# EUROPEAN PATENT APPLICATION

(11) **EP 4 745 647 A1**
(43) Date of publication of application: **20.05.2026**
(21) Application number: 24902706.1
(22) Date of filing: 05.12.2024
(51) Int. Cl.: G02B 13/00, F21S 43/20

(54) **LENS DEVICE, PROJECTION DEVICE, VEHICLE LAMP DEVICE AND VEHICLE**

(30) Priority: 14.12.2023 CN 202311723350
(71) Applicant: Shenzhen Yinwang Intelligent Technologies Co., Ltd., Shenzhen, Guangdong 518110 (CN)
(72) Inventor: MA, Ming, Shenzhen, Guangdong 518129 (CN); ZHAO, Zhuang, Shenzhen, Guangdong 518129 (CN); PAN, Zhong, Shenzhen, Guangdong 518129 (CN)
(74) Representative: Gill Jennings & Every LLP
(86) International application number: PCT/CN2024/137240
(87) International publication number: WO 2025/124285

(57) **Abstract**

Embodiments of this application provide a lens, a projection apparatus, a vehicle lamp apparatus, and a vehicle, relating to the field of optical technologies. The lens includes at least five lens elements arranged from an image side to an object side. An image side surface of a lens element closest to the image side in the lens is a concave surface, there are at least three lens elements having positive focal powers in the lens, and there is at least one lens element having a negative focal power in the lens. When there is one lens element having a negative focal power, the lens element having the negative focal power is disposed between the lens element closest to the image side in the lens and a lens element closest to the object side in the lens. The lens provided in embodiments of this application can implement a large field of view with Fno less than or equal to 1.0, so that the lens can have features of both a large aperture and a large field of view.

## Description

This application claims priority to Chinese Patent Application No. 202311723350.6, filed with the China National Intellectual Property Administration on December 14, 2023 and entitled "LENS, PROJECTION APPARATUS, VEHICLE LAMP APPARATUS, AND VEHICLE", which is incorporated herein by reference in its entirety.

### TECHNICAL FIELD

Embodiments of this application relate to the field of optical technologies, and in particular, to a lens, a projection apparatus, a vehicle lamp apparatus, and a vehicle.

### BACKGROUND

With the development of intelligent vehicle technologies, in-vehicle headlights are expected not only to provide conventional lighting functions but also to project patterns, to meet growing demands for welcome scenarios, information interaction, autonomous driving, and the like. Therefore, to meet the increasing demands, optical requirements for headlights capable of projecting patterns are increasingly stringent. For example, vehicle lamps are expected to offer a large projection field of view (field of view, FOV), which is an important indicator of an amount of information that can be reflected. A larger field of view indicates a larger amount of information that can be reflected. However, lenses used in vehicle lamps cannot have both a large aperture and a large field of view.

### SUMMARY

Embodiments of this application provide a lens, a projection apparatus, a vehicle lamp apparatus, and a vehicle, so that the lens can have both a large aperture and a large field of view.

According to a first aspect of this application, a lens is provided. The lens includes at least five lens elements arranged from an image side to an object side. An image side surface of a lens element closest to the image side in the lens is a concave surface, there are at least three lens elements having positive focal powers in the lens, and there is at least one lens element having a negative focal power in the lens. When there is one lens element having a negative focal power, the lens element having the negative focal power is disposed between the lens element closest to the image side in the lens and a lens element closest to the object side in the lens.

The lens provided in embodiments of this application includes the at least five lens elements, the at least three lens elements in the lens elements have the positive focal powers, the at least one lens element in the lens has the negative focal power, and the image side surface of the lens element closest to the image side in the lens is the concave surface. In this way, a large field of view can be implemented with Fno less than or equal to 1.0, so that the lens can have features of both a large aperture and a large field of view, to meet a projection requirement. In addition, on the premise of implementing the large aperture and the large field of view, a back focal length of the lens can be ensured to be long enough, to facilitate disposing of a back-end optical path.

When there is one lens element having a negative focal power, the lens element having the negative focal power is disposed between the lens element closest to the image side in the lens and the lens element closest to the object side in the lens, to ensure that the lens has the features of both the large aperture and the large field of view. In addition, when there are at least two lens elements having negative focal powers, and the lens element closest to the object side and/or the lens element closest to the image side in the lens has a negative focal power, the lens can also have the features of both the large aperture and the large field of view.

In a possible implementation, the lens satisfies a relational expression: 0.8<BFL/EFL<0.9, where BFL is a back focal length of the lens, and EFL is a focal length of the lens.

When the lens provided in embodiments of this application satisfies the relational expression: 0.8<BFL/EFL<0.9, an optical path of the lens can be prevented from being excessively long or excessively short, to facilitate design and disposing of the back-end optical path. In addition, it can be further ensured that the lens has the features of both the large aperture and the large field of view.

In a possible implementation, the lens satisfies a relational expression: 33 mm<EFL<38 mm, where EFL is the focal length of the lens.

The focal length of the lens provided in embodiments of this application is greater than 33 mm and less than 38 mm, so that a field of view greater than 20°×10° can be implemented on the premise that the large aperture is implemented, where 20° indicates a field of view of the lens in a horizontal direction, and 10° indicates a field of view of the lens in a vertical direction.

In a possible implementation, the lens satisfies a relational expression: -4<R1/EFL<-2, where R1 is a curvature radius of the image side surface of the lens element closest to the image side in the lens, and EFL is the focal length of the lens.

The lens provided in embodiments of this application satisfies the relational expression: -4<R1/EFL<-2, so that manufacturing difficulty of the lens element closest to the image side in the lens can be reduced and a yield can be improved on the premise that both the large aperture and the large field of view are implemented, to help improve economy, and further facilitate aberration correction. In addition, this can further prevent the image side surface of the lens element closest to the image side in the lens from being excessively protruding or excessively flat. An excessively protruding image side surface of the lens element closest to the image side may cause interference between the lens and another element, and an excessively flat image side surface of the lens element closest to the image side may affect a shape of a vehicle lamp.

In a possible implementation, the lens satisfies a relational expression: -152 mm<R1<-99 mm, where R1 is the curvature radius of the image side surface of the lens element closest to the image side in the lens.

The lens provided in embodiments of this application satisfies the relational expression: -152 mm<R1<-99 mm, so that the manufacturing difficulty of the lens element closest to the image side in the lens can be reduced and the yield can be improved on the premise that both the large aperture and the large field of view are implemented, to help improve economy, and further facilitate aberration correction. In addition, this can further prevent the image side surface of the lens element closest to the image side in the lens from being excessively protruding or excessively flat, to effectively balance optical performance of the lens and the shape of the vehicle lamp.

In a possible implementation, the lens satisfies a relational expression: - 10<R2/EFL<10, where R2 is a curvature radius of an object side surface of the lens element closest to the object side in the lens, and EFL is the focal length of the lens.

The lens provided in embodiments of this application satisfies the relational expression: -10<R2/EFL<10, so that manufacturing difficulty of the lens element closest to the object side in the lens can be reduced and a yield can be improved on the premise that both the large aperture and the large field of view are implemented, to help improve economy. In addition, this can further prevent the object side surface of the lens element closest to the object side in the lens from being excessively protruding or excessively concave. An excessively protruding object side surface of the lens element closest to the object side may interfere with another optical element, or compress optical space between the lens and a projection chip, or cause damage to the lens element closest to the object side. An excessively concave object side surface of the lens element closest to the object side is unfavorable to aberration correction.

In a possible implementation, the lens satisfies a relational expression: -380 mm<R2<380 mm, where R2 is the curvature radius of the object side surface of the lens element closest to the object side in the lens.

The lens provided in embodiments of this application satisfies the relational expression: -380 mm<R2<380 mm, so that the manufacturing difficulty of the lens element closest to the object side in the lens can be reduced and the yield can be improved on the premise that both the large aperture and the large field of view are implemented, to help improve economy. In addition, this can further prevent the object side surface of the lens element closest to the object side in the lens from being excessively protruding or excessively concave, to effectively balance the optical performance of the lens and the shape of the vehicle lamp.

In a possible implementation, the lens element closest to the image side in the lens has a positive focal power.

According to the lens provided in embodiments of this application, the lens element closest to the image side is disposed having a positive focal power, to help improve economy of the lens on the premise that both the large aperture and the large field of view are implemented.

In a possible implementation, the lens element closest to the object side in the lens has a positive focal power.

According to the lens provided in embodiments of this application, the lens element closest to the object side is disposed having a positive focal power, so that an amount of light entering the lens can be increased, to improve the optical performance, and further improve economy of the lens.

According to a second aspect of this application, a projection apparatus is provided, including a display unit and the lens according to any one of the first aspect. The display unit is configured to emit imaging light to the lens.

In a possible implementation, the display unit includes a light source unit and a modulation unit. The modulation unit is configured to: modulate a light beam emitted by the light source unit to generate the imaging light, and emit the imaging light to the lens.

In a possible implementation, the display unit further includes a reflection unit, and the reflection unit is configured to reflect the light beam emitted by the light source unit to the modulation unit.

According to a third aspect of this application, a vehicle lamp apparatus is provided, including a housing and the projection apparatus according to any one of the second aspect. At least a part of the projection apparatus is disposed inside the housing.

According to a fourth aspect of this application, a vehicle is provided, including the vehicle lamp apparatus according to the third aspect.

### BRIEF DESCRIPTION OF DRAWINGS

FIG. 1 is a diagram of a structure of a vehicle lamp apparatus according to an embodiment of this application;
FIG. 2 is a diagram of a structure of a lens according to an embodiment of this application;
FIG. 3 is a diagram of a structure of a first projection apparatus according to Embodiment 1 of this application;
FIG. 4 is a spherical chromatic aberration diagram of the lens in FIG. 3;
FIG. 5 is an astigmatism and field curvature diagram of the lens in FIG. 3;
FIG. 6 is a distortion diagram of the lens in FIG. 3;
FIG. 7 is a diagram of a structure of a second projection apparatus according to Embodiment 2 of this application;
FIG. 8 is a spherical chromatic aberration diagram of the lens in FIG. 7;
FIG. 9 is an astigmatism and field curvature diagram of the lens in FIG. 8;
FIG. 10 is a distortion diagram of the lens in FIG. 8;
FIG. 11 is a diagram of a structure of a third projection apparatus according to Embodiment 3 of this application;
FIG. 12 is a spherical chromatic aberration diagram of the lens in FIG. 11;
FIG. 13 is an astigmatism and field curvature diagram of the lens in FIG. 11; and
FIG. 14 is a distortion diagram of a lens 10 in FIG. 11.

Description of reference numerals:
100: vehicle lamp apparatus,
110: housing, 120: projection apparatus,
10: lens, 11: first lens element, 12: second lens element, 13: third lens element, 14: fourth lens element, 15: fifth lens element, 16: stop, 17: cover glass,
20: display unit, 21: light source unit, 211: light source, 212: collimation unit, 22: modulation unit, and 23: reflection unit.

### DESCRIPTION OF EMBODIMENTS

Terms used in implementations of this application are merely used to explain specific embodiments of this application, but are not intended to limit this application.

For ease of understanding, related technical terms in embodiments of this application are first explained and described.

Focal length, also referred to as a focal distance, is a measurement of convergence or divergence of light in an optical system. It is a perpendicular distance from an optical center of the lens or the lens assembly to the focal plane when an object at infinity forms a clear image on a focal plane through a lens or a lens assembly.

Image side is a side on which an image is located with a lens as a boundary, and a surface of a lens element facing the image side is an image side surface of the lens element.

Object side is a side on which a modulation unit is located, and a surface of a lens element facing the object side is an object side surface of the lens element.

Total track length (total track length, TTL for short) is a total length from a vertex of a first lens element that is disposed adjacent to an object side in a lens to an imaging plane of the lens, also known as an optical total length.

Back focal length (back focal length, BFL for short) is defined as a distance from a lens element closest to an imaging plane in a lens to a modulation unit.

Focal power quantifies a capability of a lens element to refract incident parallel light beams.

Positive focal power indicates that a lens element has a positive focal length and has an effect of converging light rays.

Negative focal power indicates that a lens element has a negative focal length and has an effect of diverging light rays.

Aperture is an apparatus configured to control an amount of light passing through a lens and entering an inside of an electronic device, and is usually in the lens. A size of the aperture is represented by a value of F# (F-number).

F-number F# is a relative value (a reciprocal of a relative aperture) obtained by dividing a focal length of a lens by a light transmission diameter of the lens. A smaller value of F-number F# indicates a larger amount of light entering the lens within a same unit of time.

Cover glass (cover glass, CG) is configured to protect a projection chip.

A modulation unit is configured to modulate a light beam emitted by a light source, to generate image light that forms an image.

A digital micromirror device (digital micromirror device, DMD) is configured to reflect light rays to form an image.

A liquid crystal on silicon (liquid crystal on silicon, LCOS) is configured to reflect light rays.

An axial chromatic aberration, also referred to as a longitudinal chromatic aberration or a positional chromatic aberration or axial chromatic aberration, occurs when a beam of light rays parallel to an optical axis converges at different positions after passing through a lens. This aberration arises because the lens has different imaging positions for light of various wavelengths, resulting in image planes for images of light of different colors not completely overlap during final imaging, and causing polychromatic light to spread and produce dispersion.

Distortion (distortion), also referred to as image distortion, refers to a degree at which an image formed by an optical system for an object is distorted relative to the object. Distortion arises from aperture stop-induced aberrations. After passing through the optical system, principle light rays from different fields of view intersect a Gaussian image plane at heights that differ from ideal image heights, and the difference between these is the distortion. Therefore, the distortion only changes an imaging position of an off-axis object point on an ideal plane, causing a shape of an image to become distorted without affecting image sharpness.

With the development of intelligent vehicle technologies, in-vehicle headlights are expected not only to provide conventional lighting functions but also to project patterns, to meet growing demands for welcome scenarios, information interaction, autonomous driving, and the like. Therefore, to meet the increasing demands, optical requirements for headlights capable of projecting patterns are increasingly stringent. For example, vehicle lamps are expected to offer a large projection field of view (field of view, FOV), which is an important indicator of an amount of information that can be reflected. A larger field of view indicates a larger amount of information that can be reflected. However, lenses used in vehicle lamps cannot have both a large aperture and a large field of view. Therefore, how to enable the lens to have both a large aperture and a large field of view becomes an urgent problem to be solved.

In view of this, embodiments of this application provide a lens 10, a projection apparatus 120, a vehicle lamp apparatus 100, and a vehicle. The lens 10 can have features of both a large aperture and a large field of view, and can expand a projection range and improve brightness to meet a use requirement.

The vehicle provided in embodiments of this application may include but is not limited to a car, a truck, a motorcycle, a bus, a boat, an airplane, a helicopter, a lawn mower, a recreational vehicle, a playground vehicle, a construction device, a trolley, a golf cart, a train, a handcart, or the like. In embodiments of this application, a car is used as an example of the vehicle for description. The vehicle may include the vehicle lamp apparatus 100, which can emit illumination light at night to ensure driving safety.

The vehicle lamp apparatus 100 provided in embodiments of this application may include but is not limited to a pixel display vehicle lamp, a near-field vehicle welcome lamp, a pedestrian or interactive vehicle lamp, a vehicle headlight, and the like. For example, in embodiments of this application, the vehicle headlight is used as an example of the vehicle lamp apparatus 100 for description. The vehicle lamp apparatus 100 can implement projection imaging and display illumination functions, for example, illumination at night.

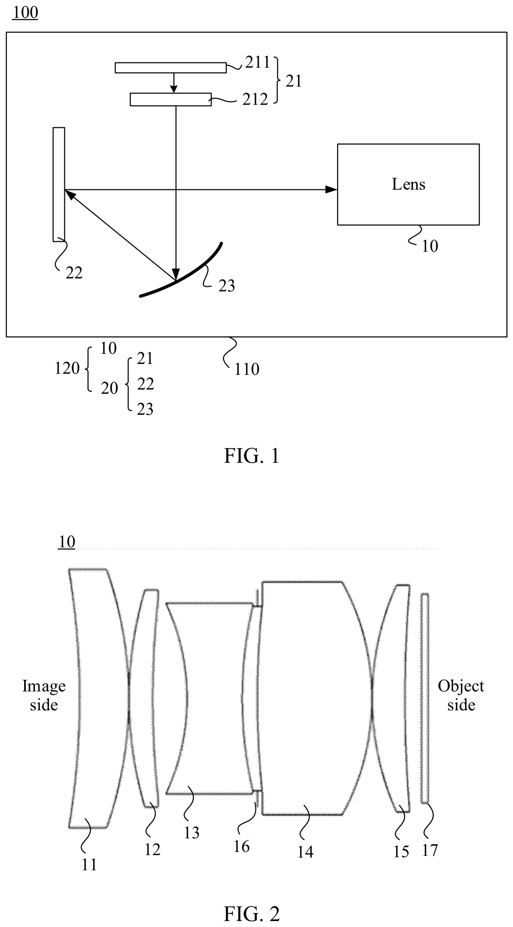

FIG. 1 is a diagram of a structure of a vehicle lamp apparatus according to an embodiment of this application. Refer to FIG. 1. The vehicle lamp apparatus 100 may include a housing 110 and a projection apparatus 120. At least a part of the projection apparatus 120 is disposed inside the housing 110. For example, as shown in FIG. 1, the projection apparatus 120 is disposed inside the housing 110. Certainly, a part of the projection apparatus 120 may also be disposed inside the housing 110, and the other part is disposed outside the housing 110. The projection apparatus 120 is configured to implement projection imaging and display illumination functions.

Refer to FIG. 1. The projection apparatus 120 may include a display unit 20 and a lens 10. The display unit 20 is configured to emit imaging light to the lens 10, and the lens 10 may emit the imaging light to the outside of the housing 110, to form an image outside the housing 110 or implement an illumination function.

Refer to FIG. 1. The display unit 20 includes a light source unit 21 and a modulation unit 22. The modulation unit 22 is configured to: modulate a light beam emitted by the light source unit 21 to generate the imaging light, and emit the imaging light to the lens 10.

A specific structure of the modulation unit 22 is not limited herein. For example, the modulation unit 22 may be a projection chip. The projection chip may modulate the light beam emitted by the light source unit 21 to generate the imaging light emitted to the lens 10. The projection chip may include but is not limited to a DMD, an LCOS, a MEMS, an LCD, or the like.

In some possible implementations, still refer to FIG. 1. The light source unit 21 may further include a light source 211 and a collimation unit 212. The collimation unit 212 is configured to: collimate light emitted by the light source 211, and transmit a collimated light beam to a reflection unit 23. The reflection unit 23 reflects the collimated light beam to the modulation unit 22.

In some possible implementations, still refer to FIG. 1. The display unit 20 may further include a reflection unit 23. The reflection unit 23 is configured to reflect the light beam emitted by the light source unit 21 to the modulation unit 22.

A specific structure of the reflection unit 23 is not limited herein. For example, still refer to FIG. 1. The reflection unit 23 may be a curved-surface mirror, and the light emitted by the light source unit 21 is reflected to the modulation unit 22 through a curved surface of the curved-surface mirror.

It should be noted that, in addition to being used in the vehicle lamp apparatus 100 for implementing projection imaging and display illumination functions, the projection apparatus 120 provided in embodiments of this application may be further used in devices such as a projector, a head-up display apparatus, and augmented reality (augmented reality, AR) glasses, to implement the projection imaging function.

The following describes the lens 10 provided in embodiments of this application with reference to the accompanying drawings.

FIG. 2 is a diagram of a structure of a lens according to an embodiment of this application.

The lens 10 provided in embodiments of this application includes at least five lens elements arranged from an image side to an object side. For example, as shown in FIG. 2, the lens 10 may include the five lens elements sequentially arranged from the image side to the object side. The five lens elements are respectively a first lens element 11, a second lens element 12, a third lens element 13, a fourth lens element 14, and a fifth lens element 15. Certainly, there may alternatively be more than five lens elements. As shown in FIG. 2, an image side surface of a lens element closest to the image side in the lens 10 is a concave surface, that is, an image side surface of the first lens element 11 is a concave surface. There are at least three lens elements having positive focal powers in the lens 10, and there is at least one lens element having a negative focal power in the lens 10. For example, as shown in FIG. 2, four of the five lens elements have positive focal powers, and the other lens element has a negative focal power. Certainly, there may alternatively be three lens elements having positive focal powers in the five lens elements, and there may alternatively be two lens elements having negative focal powers in the five lens elements. When there is one lens element having a negative focal power, the lens element having the negative focal power is disposed between the lens element closest to the image side in the lens 10 and a lens element closest to the object side in the lens 10. For example, as shown in FIG. 2, the lens 10 may include the first lens element 11 having a positive focal power, the second lens element 12 having a positive focal power, the third lens element 13 having a negative focal power, the fourth lens element 14 having a positive focal power, and the fifth lens element 15 having a positive focal power that are arranged from the image side to the object side. The first lens element 11 is closest to the image side, and the fifth lens element 15 is closest to the object side. When there are a plurality of lens elements having negative focal powers, positions of the lens elements having the negative focal powers are not limited herein.

The lens 10 includes the at least five lens elements, the at least three lens elements in the lens elements have the positive focal powers, the at least one lens element in the lens 10 has the negative focal power, and the image side surface of the lens element closest to the image side in the lens 10 is the concave surface. In this way, a large field of view can be implemented with Fno less than or equal to 1.0, so that the lens 10 can have features of both a large aperture and a large field of view, to meet a projection requirement. In addition, on the premise of implementing the large aperture and the large field of view, a back focal length of the lens 10 can be ensured to be long enough, to facilitate disposing of a back-end optical path.

When there is one lens element having a negative focal power, the lens element having the negative focal power is disposed between the lens element closest to the image side in the lens 10 and the lens element closest to the object side in the lens 10, to ensure that the lens 10 has the features of both the large aperture and the large field of view. When there are at least two lens elements having negative focal powers, the lens element closest to the object side and/or the lens element closest to the image side in the lens 10 may also have a negative focal power, to also ensure that the lens 10 has the features of both the large aperture and the large field of view.

In some possible implementations, the lens 10 may further meet a relational expression: 0.8<BFL/EFL<0.9, where BFL is a back focal length of the lens 10, and EFL is a focal length of the lens 10.

Correspondingly, when the lens 10 satisfies the relational expression: 0.8<BFL/EFL<0.9, an optical path of the lens 10 can be prevented from being excessively long or excessively short, to facilitate design and disposing of the back-end optical path. In addition, it can be further ensured that the lens 10 has the features of both the large aperture and the large field of view.

A specific ratio of BFL/EFL is not limited herein. For example, the specific ratio may include but is not limited to 0.81, 0.82, 0.83, 0.84, 0.85, 0.8591, 0.86, 0.87, 0.88, 0.89 or others.

In some possible implementations, the lens 10 may further meet a relational expression: 33 mm<EFL<38 mm, where EFL is the focal length of the lens 10.

Correspondingly, the focal length of the lens 10 is greater than 33 mm and less than 38 mm, so that a field of view greater than 20°×10° can be implemented on the premise that the large aperture is implemented, where 20° indicates a field of view of the lens 10 in a horizontal direction, and 10° indicates a field of view of the lens 10 in a vertical direction.

A specific value of the focal length of the lens 10 is not limited herein. For example, the specific value may include but is not limited to 33.5 mm, 33.88 mm, 33.9 mm, 34 mm, 34.5 mm, 35 mm, 35.3 mm, 36 mm, 37 mm, 37.5 mm, or others.

In some possible implementations, the lens 10 may further meet a relational expression: -4<R1/EFL<-2, where R1 is a curvature radius of the image side surface of the lens element closest to the image side in the lens 10, and EFL is the focal length of the lens 10.

Correspondingly, the lens 10 satisfies the relational expression: -4<R1/EFL<-2, so that manufacturing difficulty of the lens element closest to the image side in the lens 10 can be reduced and a yield can be improved on the premise that both the large aperture and the large field of view are implemented, to help improve economy, and further facilitate aberration correction. In addition, this can further prevent the image side surface of the lens element closest to the image side in the lens 10 from being excessively protruding or excessively flat. An excessively protruding image side surface of the lens element closest to the image side may cause interference between the lens and another element, and an excessively flat image side surface of the lens element closest to the image side may affect a shape of a vehicle lamp.

A specific ratio of R1/EFL is not limited herein. For example, the specific ratio may include but is not limited to -2.1, -2.5, -3, -3.5, -3.6, -3.8, -3.9, -3.985, or others.

In some possible implementations, the lens 10 may further meet a relational expression: -152 mm<R1<-99 mm, where R1 is the curvature radius of the image side surface of the lens element closest to the image side in the lens 10.

Correspondingly, the lens 10 may further meet the relational expression: -152 mm<R1<-99 mm, so that the manufacturing difficulty of the lens element closest to the image side in the lens 10 can be reduced and the yield can be improved on the premise that both the large aperture and the large field of view are implemented, to help improve economy, and further facilitate aberration correction. In addition, this can further prevent the image side surface of the lens element closest to the image side in the lens 10 from being excessively protruding or excessively flat, to effectively balance optical performance of the lens 10 and the shape of the vehicle lamp.

A specific value of R1 is not limited herein. For example, the specific value may include but is not limited to -99.5 mm, -100 mm, -105 mm, -110 mm, -115 mm, -120 mm, -121 mm, - 125 mm, -130 mm, -135 mm, -140 mm, -145 mm, -150 mm, -151 mm, -151.95 mm, or others.

In some possible implementations, the lens 10 may further meet a relational expression: -10<R2/EFL<10, where R2 is a curvature radius of an object side surface of the lens element closest to the object side in the lens 10, and EFL is the focal length of the lens 10.

Correspondingly, the lens 10 satisfies the relational expression: -10<R2/EFL<10, so that manufacturing difficulty of the lens element closest to the object side in the lens 10 can be reduced and a yield can be improved on the premise that both the large aperture and the large field of view are implemented, to help improve economy. In addition, this can further prevent the object side surface of the lens element closest to the object side in the lens 10 from being excessively protruding or excessively concave. An excessively protruding object side surface of the lens element closest to the object side may interfere with another optical element, or compress optical space between the lens 10 and a projection chip, or cause damage to the lens element closest to the object side. An excessively concave object side surface of the lens element closest to the object side is unfavorable to aberration correction.

A specific ratio of R2/EFL is not limited herein. For example, the specific ratio may include but is not limited to -9, -8, -7, -6, -5, -4, -3, -2, -1, 0, 1, 1.85, 1.897, 1.9, 1.95, 2, 2.5, 5.987, 2.6, 3, 3.5, 3.6, 4, 4.5, 5, 5.1, 5.159, 5.19, 5.195, 6, 7, 8, 9, 9.1, 9.22, 9.984, or others.

In some possible implementations, the lens 10 may further meet a relational expression: -380 mm<R2<380 mm, where R2 is the curvature radius of the object side surface of the lens element closest to the object side in the lens 10.

Correspondingly, the lens 10 satisfies the relational expression: -380 mm<R2<380 mm, so that the manufacturing difficulty of the lens element closest to the object side in the lens 10 can be reduced and the yield can be improved on the premise that both the large aperture and the large field of view are implemented, to help improve economy. In addition, this can further prevent the object side surface of the lens element closest to the object side in the lens 10 from being excessively protruding or excessively concave, to effectively balance the optical performance of the lens 10 and the shape of the vehicle lamp.

A specific value of R2 is not limited herein. For example, the specific value may include but is not limited to -375 mm, -370 mm, -350 mm, -300 mm, -250 mm, -200 mm, -150 mm, - 100 mm, 0, 10 mm, 50 mm, 73.5 mm, 76.98 mm, 79 mm, 80 mm, 85 mm, 90 mm, 95 mm, 100 mm, 105 mm, 110 mm, 115 mm, 120 mm, 121 mm, 125 mm, 129 mm, 130 mm, 140 mm, 150 mm, 160 mm, 170 mm, 180 mm, 181 mm, 182 mm, 183 mm, 184 mm, 184.954 mm, 200 mm, 250 mm, 300 mm, 310 mm, 340 mm, 350 mm, 355 mm, 359 mm, 360 mm, 370 mm, 375 mm, or others.

In some possible implementations, the lens element closest to the image side in the lens 10 may have a positive focal power. For example, as shown in FIG. 2, the first lens element 11 closest to the image side has the positive focal power. Certainly, the first lens element 11 may alternatively have a negative focal power.

Correspondingly, a lens element having a positive focal power is disposed as the lens element closest to the image side, to help improve economy of the lens 10 on the premise that both the large aperture and the large field of view are implemented.

In some possible implementations, the lens element closest to the object side in the lens 10 may have a positive focal power. For example, as shown in FIG. 2, the fifth lens element 15 closest to the object side has the positive focal power. Certainly, the fifth lens element 15 may alternatively have a negative focal power.

Correspondingly, a lens element having a positive focal power is disposed as the lens element closest to the object side, so that an amount of light entering the lens 10 can be increased, to improve the optical performance, and further improve economy of the lens 10.

In some possible implementations, at least one lens element may be a spherical lens. For example, as shown in FIG. 2, the five lens elements in the lens 10 may all be spherical lenses. Certainly, a quantity of spherical lenses may be less than five.

Correspondingly, a larger quantity of spherical lenses used in the lens 10 provided in embodiments of this application indicates a larger degree of reducing processing difficulty of the lens 10, to improve the yield, and further improve imaging quality.

In some possible implementations, refer to FIG. 2. The lens 10 may further include a stop 16. The stop 16 may be disposed between two adjacent lens elements in the lens 10. For example, as shown in FIG. 2, the stop 16 may be disposed between the third lens element 13 and the fourth lens element 14. Certainly, the stop 16 may alternatively be disposed at another position.

In some possible implementations, refer to FIG. 2. The lens 10 may further include cover glass 17. The cover glass 17 is disposed between the lens element closest to the object side in the lens 10 and the modulation unit 22, and the cover glass 17 is configured to protect the modulation unit 22.

In some possible implementations, the lens 10 may further include a light filter (not shown in the figure) configured to correct a color deviation. The light filter is configured to be disposed between the lens element closest to the object side in the lens 10 and the modulation unit 22.

It should be noted that one or both of the cover glass 17 and the light filter may be disposed in the lens 10.

The following describes a structure and performance of the projection apparatus 120 provided in embodiments of this application with reference to specific embodiments.

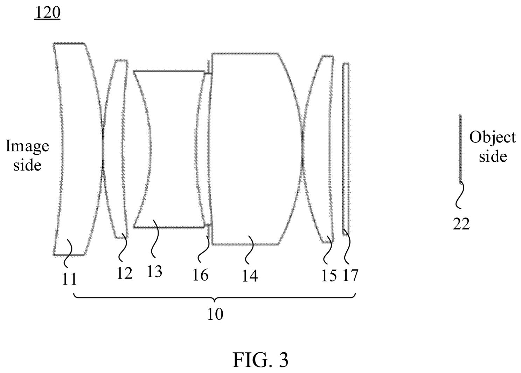

FIG. 3 is a diagram of a structure of a first projection apparatus according to Embodiment 1 of this application.

Refer to FIG. 3. The projection apparatus 120 may include the lens 10 and the modulation unit 22. The lens 10 includes the first lens element 11, the second lens element 12, the third lens element 13, the stop 16, the fourth lens element 14, the fifth lens element 15, and a cover glass 17 that are sequentially arranged from the image side to the object side. The first lens element 11 is closest to the image side, the image side surface of the first lens element 11 is the concave surface, the fifth lens element 15 is closest to the image side, and the cover glass 17 is disposed between the fifth lens element 15 and the modulation unit 22. The modulation unit 22 may be a projection chip, and the projection chip may be a DMD or an LCOS.

The first lens element 11 has the positive focal power, and a ratio of a focal length f1 of the first lens element 11 to a focal length EFL of the lens 10 is |f1/EFL|=3.27. The second lens element 12 has the positive focal length, and a ratio of a focal length f2 of the second lens element 12 to the focal length EFL of the lens 10 is |f2/EFL|=2.45. The third lens element 13 has the negative focal length, and a ratio of a focal length f3 of the third lens element 13 to the focal length EFL of the lens 10 is |f3/EFL|=2.11. The fourth lens element 14 has the positive focal length, and a ratio of a focal length f4 of the fourth lens element 14 to the focal length EFL of the lens 10 is |f4/EFL|=1.16. The fifth lens element 15 has the positive focal length, and a ratio of a focal length f5 of the fifth lens element 15 to the focal length EFL of the lens 10 is |f5/EFL|=1.77.

The lens element closest to the image side in the lens 10 is the first lens element 11. A curvature radius R1 of the image side surface of the first lens element 11 is -115 mm, which is greater than -152 mm and less than -99 mm, and meets the requirement. A ratio R1/EFL of the curvature radius R1 of the image side surface of the first lens element 11 to the focal length EFL of the lens 10 is -3.25, which is greater than -4 and less than -2, and meets the requirement.

The lens element closest to the object side in the lens 10 is the fifth lens element 15, and a curvature radius R2 of an object side surface of the fifth lens element 15 is 194 mm, which is greater than -380 mm and less than 380 mm, and meets the requirement. A ratio R2/EFL of the curvature radius R2 of the object side surface of the fifth lens element 15 to the focal length EFL of the lens 10 is 5.44, which is greater than -10 and less than 10, and meets the requirement.

A ratio BFL/EFL of a back focal length BFL of the lens 10 to the focal length EFL of the lens 10 is 0.851, which is greater than 0.8 and less than 0.9, and meets the requirement.

The focal length EFL of the lens 10 is 35.75 mm, which is greater than 33 mm and less than 38 mm, and meets the requirement.

**Table 1 shows optical parameters of optical elements in the projection apparatus 120 provided in Embodiment 1.**

| Surface number | Surface type | R (mm) | TH (mm) | Nd | Vd |
|---|---|---|---|---|---|
| OBJ | Spherical | Infinity | 10000 | | |
| S1 | Spherical | -115.000 | 9.200 | 1.91 | 35.3 |
| S2 | Spherical | -57.190 | 0.058 | | |
| S3 | Spherical | 56.033 | 4.443 | 2.05 | 26.9 |
| S4 | Spherical | 138.227 | 6.403 | | |
| S5 | Spherical | -33.611 | 10.350 | | |
| S6 | Spherical | 60.669 | 2.811 | 1.81 | 22.7 |
| S7 | Spherical | Infinity | 0.000 | | |
| S8 | Spherical | 132.216 | 21.444 | 1.73 | 54.7 |
| S9 | Spherical | -36.129 | 0.058 | | |
| S10 | Spherical | 41.043 | 6.117 | 1.816 | 46.6 |
| S11 | Spherical | 194.441 | 3.103 | | |
| S12 | Spherical | Infinity | 1.265 | 1.523 | 58.6 |
| S13 | Spherical | Infinity | 25.532 | | |
| ImgH | Spherical | Infinity | 0 | | |

S1 is the image side surface of the first lens element 11. S2 is an object side surface of the first lens element 11. S3 is an image side surface of the second lens element 12. S4 is an object side surface of the second lens element 12. S5 is an image side surface of the third lens element 13. S6 is an object side surface of the third lens element 13. S7 is the stop 16. S8 is an image side surface of the fourth lens element 14. S9 is an object side surface of the fourth lens element 14. S10 is an image side surface of the fifth lens element 15. S11 is the object side surface of the fifth lens element 15. S12 is an image side surface of the cover glass 17. S13 is an object side surface of the cover glass 17. OBJ is a projection plane (an object plane). ImgH is an imaging plane.

R is a curvature radius of an optical element (for example, a lens element or cover glass) at a position corresponding to an optical axis. TH is a surface thickness of the optical element in a direction of the optical axis. Nd is a refractive index of each optical element when a d line is irradiated to the optical element. Vd is an Abbe number of the optical element.

**Table 2 shows optical parameters of the lens 10 provided in Embodiment 1.**

| | | | |
|---|---|---|---|
| f1 (mm) | 114.810 | EFL (mm) | 35.75 |
| f2 (mm) | 86.018 | TTL (mm) | 90.79 |
| f3 (mm) | -73.838 | Fno | 1.0 |
| f4 (mm) | 40.848 | BFL (mm) | 29.84 |
| f5 (mm) | 62.119 | R1 (mm) | -115 |
| R2 (mm) | 194.44 | FOV (°) | 22.3 |

EFL is the focal length of the lens 10. FOV is a maximum field of view of the lens 10. Fno is an aperture of the lens 10. BFL is the back focal length of the lens 10. TTL is an optical total length of the lens 10. R1 is the curvature radius of the image side surface of the lens element closest to the image side in the lens 10. R2 is the curvature radius of the object side surface of the lens element closest to the object side in the lens 10. f1 is the focal length of the first lens element 11, f2 is the focal length of the second lens element 12, f3 is the focal length of the third lens element 13, f4 is the focal length of the fourth lens element 14, and f5 is the focal length of the fifth lens element 15.

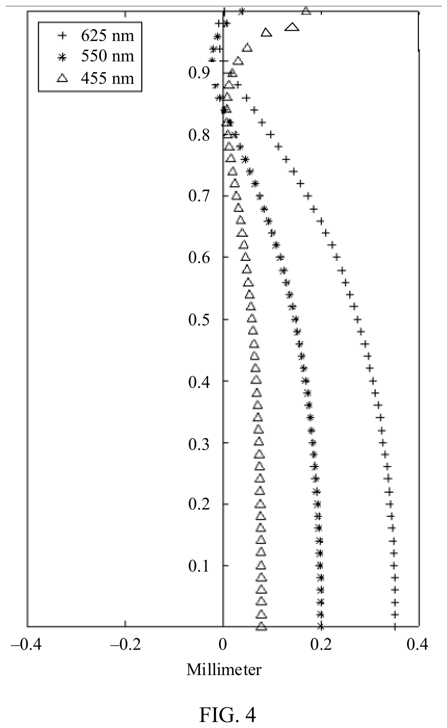

FIG. 4 is a spherical chromatic aberration diagram of the lens in FIG. 3. In FIG. 4, a vertical coordinate represents a normalized pupil coordinate, and a horizontal coordinate represents an axial aberration in a unit of millimeter. In FIG. 4, three curves respectively correspond to axial aberration curves of light with a wavelength of 625 nm, light with a wavelength of 550 nm, and light with a wavelength of 455 nm that pass through the lens 10 in this embodiment. It can be learned from FIG. 4 that, in this embodiment, the axial aberration is controlled within an excessively small range, and is well corrected.

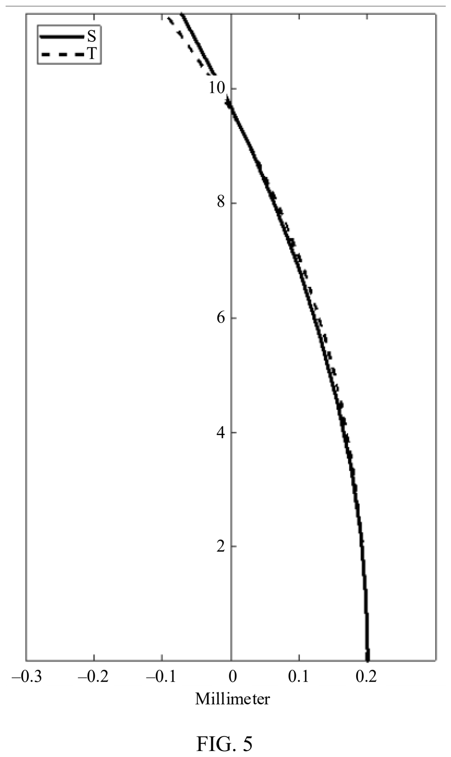

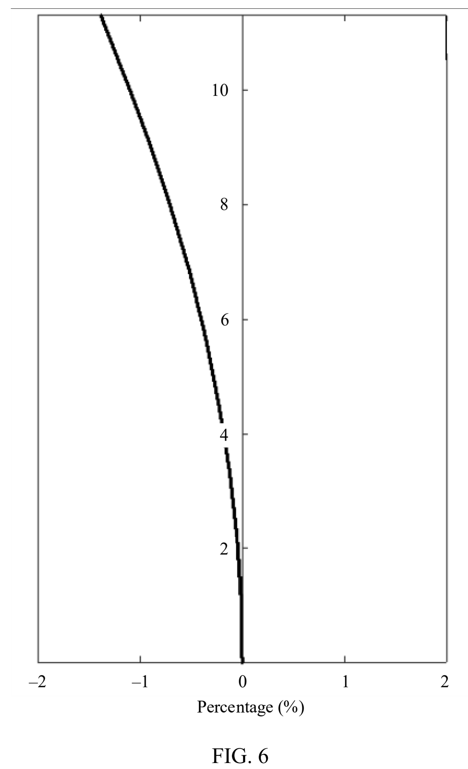

FIG. 5 is an astigmatism and field curvature diagram of the lens in FIG. 3, and FIG. 6 is a distortion diagram of the lens in FIG. 3. In FIG. 5, S represents field curvature values of light with a wavelength of 525 nm on a meridian image surface, and T represents field curvature values of the light with the wavelength of 525 nm on a sagittal image surface. In FIG. 6, a solid line represents distortion values of the light with a central wavelength of 525 nm that passes through the lens 10 in this embodiment. In this embodiment, with reference to FIG. 5 and FIG. 6, it can be learned that the lens 10 provided in this embodiment controls the field curvature and the distortion within corresponding ranges, so that a use requirement can be met.

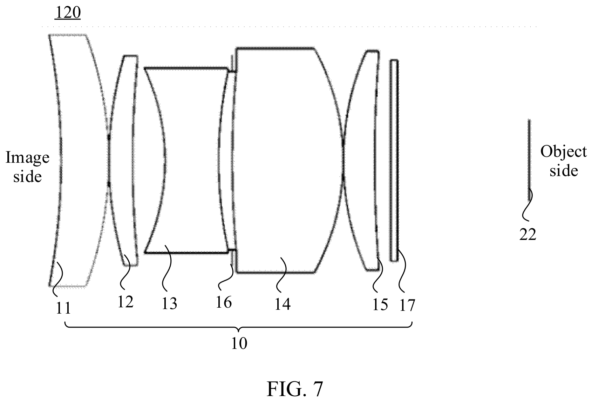

FIG. 7 is a diagram of a structure of a second projection apparatus according to Embodiment 2 of this application.

Refer to FIG. 7. The projection apparatus 120 may include the lens 10 and the modulation unit 22. The lens 10 includes the first lens element 11, the second lens element 12, the third lens element 13, the stop 16, the fourth lens element 14, the fifth lens element 15, and a cover glass 17 that are sequentially arranged from the image side to the object side. The first lens element 11 is closest to the image side, the image side surface of the first lens element 11 is the concave surface, the fifth lens element 15 is closest to the image side, and the cover glass 17 is disposed between the fifth lens element 15 and the modulation unit 22. The modulation unit 22 may be a projection chip, and the projection chip may be a DMD or an LCOS.

The first lens element 11 has the positive focal power, and a ratio of a focal length f1 of the first lens element 11 to a focal length EFL of the lens 10 is |f1/EFL|=3.33. The second lens element 12 has the positive focal length, and a ratio of a focal length f2 of the second lens element 12 to the focal length EFL of the lens 10 is |f2/EFL|=2.32. The third lens element 13 has the negative focal length, and a ratio of a focal length f3 of the third lens element 13 to the focal length EFL of the lens 10 is |f3/EFL|=2.227. The fourth lens element 14 has the positive focal length, and a ratio of a focal length f4 of the fourth lens element 14 to the focal length EFL of the lens 10 is |f4/EFL|=1.188. The fifth lens element 15 has the positive focal length, and a ratio of a focal length f5 of the fifth lens element 15 to the focal length EFL of the lens 10 is |f5/EFL|=1.787.

The lens element closest to the image side in the lens 10 is the first lens element 11. A curvature radius R1 of the image side surface of the first lens element 11 is -101.6 mm, which is greater than -152 mm and less than -99 mm, and meets the requirement. A ratio R1/EFL of the curvature radius R1 of the image side surface of the first lens element 11 to the focal length EFL of the lens 10 is -2.8968, which is greater than -4 and less than -2, and meets the requirement.

The lens element closest to the object side in the lens 10 is the fifth lens element 15, and a curvature radius R2 of an object side surface of the fifth lens element 15 is 210.16 mm, which is greater than -380 mm and less than 380 mm, and meets the requirement. A ratio R2/EFL of the curvature radius R2 of the object side surface of the fifth lens element 15 to the focal length EFL of the lens 10 is 5.9917, which is greater than -10 and less than 10, and meets the requirement.

A ratio BFL/EFL of a back focal length BFL of the lens 10 to the focal length EFL of the lens 10 is 0.8508, which is greater than 0.8 and less than 0.9, and meets the requirement.

The focal length EFL of the lens 10 is 35.07 mm, which is greater than 33 mm and less than 38 mm, and meets the requirement.

**Table 3 shows optical parameters of optical elements in the projection apparatus 120 provided in Embodiment 2.**

| Surface number | Surface type | R (mm) | TH (mm) | Nd | Vd |
|---|---|---|---|---|---|
| OBJ | Spherical | Infinity | 10000 | | |
| S1 | Spherical | -101.606 | 9.200 | 1.91 | 35.5 |
| S2 | Spherical | -54.499 | 0.058 | | |
| S3 | Spherical | 56.168 | 4.571 | 2.02 | 29.1 |
| S4 | Spherical | 161.015 | 6.237 | | |
| S5 | Spherical | -33.215 | 10.350 | | |
| S6 | Spherical | 64.183 | 2.645 | 1.81 | 22.7 |
| S7 | Spherical | Infinity | 0.000 | | |
| S8 | Spherical | 157.660 | 21.388 | 1.73 | 54.7 |
| S9 | Spherical | -35.774 | 0.057 | | |
| S10 | Spherical | 41.934 | 6.052 | 1.82 | 46.6 |
| S11 | Spherical | 210.159 | 3.102 | | |
| S12 | Spherical | Infinity | 1.265 | 1.523 | 58.6 |
| S13 | Spherical | Infinity | 25.533 | | |
| ImgH | Spherical | Infinity | -0.052 | | |

S1 is the image side surface of the first lens element 11. S2 is an object side surface of the first lens element 11. S3 is an image side surface of the second lens element 12. S4 is an object side surface of the second lens element 12. S5 is an image side surface of the third lens element 13. S6 is an object side surface of the third lens element 13. S7 is the stop 16. S8 is an image side surface of the fourth lens element 14. S9 is an object side surface of the fourth lens element 14. S10 is an image side surface of the fifth lens element 15. S11 is the object side surface of the fifth lens element 15. S12 is an image side surface of the cover glass 17. S13 is an object side surface of the cover glass 17. OBJ is a projection plane (an object plane). ImgH is an imaging plane.

R is a curvature radius of an optical element (for example, a lens element or cover glass) at a position corresponding to an optical axis. TH is a surface thickness of the optical element in a direction of the optical axis. Nd is a refractive index of each optical element when a d line is irradiated to the optical element. Vd is an Abbe number of the optical element.

**Table 4 shows optical parameters of the lens 10 provided in Embodiment 2.**

| | | | |
|---|---|---|---|
| f1 (mm) | 116.747 | EFL (mm) | 35.07 |
| f2 (mm) | 81.496 | TTL (mm) | 90.46 |
| f3 (mm) | -78.113 | Fno | 1.0 |
| f4 (mm) | 41.662 | BFL (mm) | 29.84 |
| f5 (mm) | 62.661 | R1 (mm) | -101.6 |
| R2 (mm) | 210.16 | FOV (°) | 22.3 |

EFL is the focal length of the lens 10. FOV is a maximum field of view of the lens 10. Fno is an aperture of the lens 10. BFL is the back focal length of the lens 10. TTL is an optical total length of the lens 10. R1 is the curvature radius of the image side surface of the lens element closest to the image side in the lens 10. R2 is the curvature radius of the object side surface of the lens element closest to the object side in the lens 10. f1 is the focal length of the first lens element 11, f2 is the focal length of the second lens element 12, f3 is the focal length of the third lens element 13, f4 is the focal length of the fourth lens element 14, and f5 is the focal length of the fifth lens element 15.

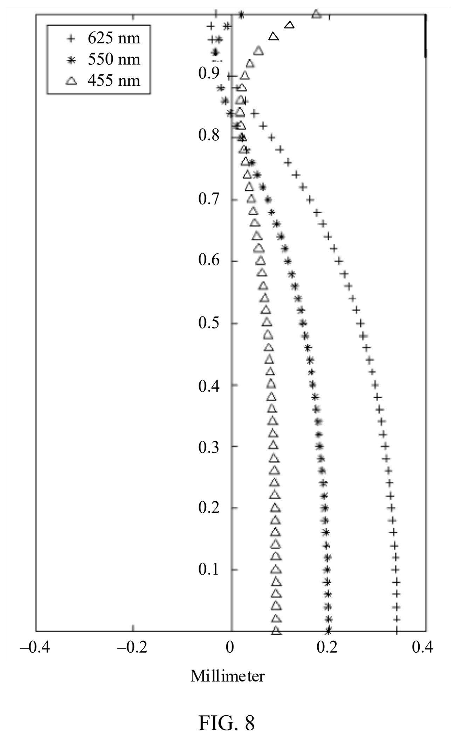

FIG. 8 is a spherical chromatic aberration diagram of the lens in FIG. 7. In FIG. 8, a vertical coordinate represents a normalized pupil coordinate, and a horizontal coordinate represents an axial aberration in a unit of millimeter. In FIG. 8, three curves respectively correspond to axial aberration curves of light with a wavelength of 625 nm, light with a wavelength of 550 nm, and light with a wavelength of 455 nm that pass through the lens 10 in this embodiment. It can be learned from FIG. 8 that, in this embodiment, the axial aberration is controlled within an excessively small range, and is well corrected.

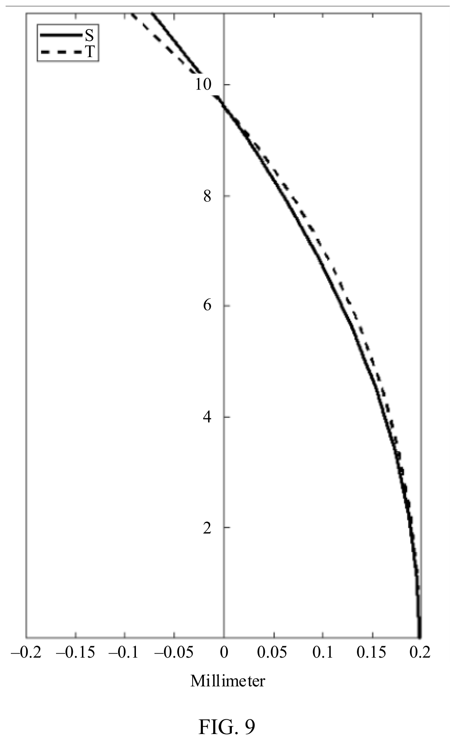

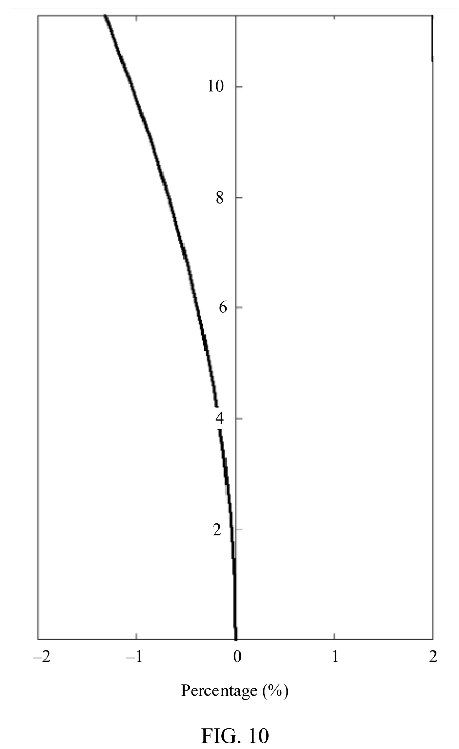

FIG. 9 is an astigmatism and field curvature diagram of the lens in FIG. 8, and FIG. 10 is a distortion diagram of the lens in FIG. 8. In FIG. 9, S represents field curvature values of light with a wavelength of 525 nm on a meridian image surface, and T represents field curvature values of the light with the wavelength of 525 nm on a sagittal image surface. In FIG. 10, a solid line represents distortion values of the light with a central wavelength of 525 nm that passes through the lens 10 in this embodiment. In this embodiment, with reference to FIG. 9 and FIG. 10, it can be learned that the lens 10 provided in this embodiment controls the field curvature and the distortion within corresponding ranges, so that a use requirement can be met.

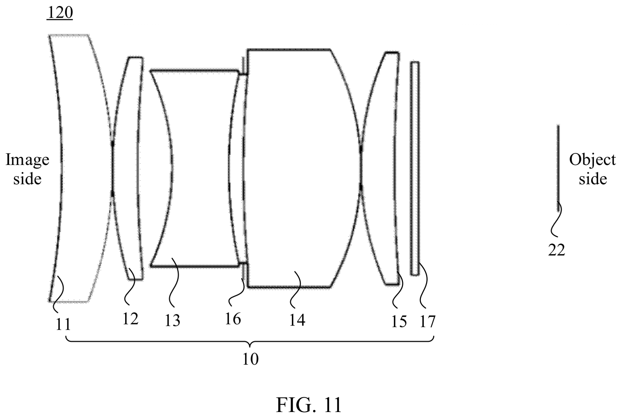

FIG. 11 is a diagram of a structure of a third projection apparatus according to Embodiment 3 of this application.

Refer to FIG. 11. The projection apparatus 120 may include the lens 10 and the modulation unit 22. The lens 10 includes the first lens element 11, the second lens element 12, the third lens element 13, the stop 16, the fourth lens element 14, the fifth lens element 15, and a cover glass 17 that are sequentially arranged from the image side to the object side. The first lens element 11 is closest to the image side, the image side surface of the first lens element 11 is the concave surface, the fifth lens element 15 is closest to the image side, and the cover glass 17 is disposed between the fifth lens element 15 and the modulation unit 22. The modulation unit 22 may be a projection chip, and the projection chip may be a DMD or an LCOS.

The first lens element 11 has the positive focal power, and a ratio of a focal length f1 of the first lens element 11 to a focal length EFL of the lens 10 is |f1/EFL|=3.138. The second lens element 12 has the positive focal length, and a ratio of a focal length f2 of the second lens element 12 to the focal length EFL of the lens 10 is |f2/EFL|=2.585. The third lens element 13 has the negative focal length, and a ratio of a focal length f3 of the third lens element 13 to the focal length EFL of the lens 10 is |f3/EFL|=2.224. The fourth lens element 14 has the positive focal length, and a ratio of a focal length f4 of the fourth lens element 14 to the focal length EFL of the lens 10 is |f4/EFL|=1.188. The fifth lens element 15 has the positive focal length, and a ratio of a focal length f5 of the fifth lens element 15 to the focal length EFL of the lens 10 is |f5/EFL|=1.728.

The lens element closest to the image side in the lens 10 is the first lens element 11. A curvature radius R1 of the image side surface of the first lens element 11 is -132.25 mm, which is greater than -152 mm and less than -99 mm, and meets the requirement. A ratio R1/EFL of the curvature radius R1 of the image side surface of the first lens element 11 to the focal length EFL of the lens 10 is -3.77, which is greater than -4 and less than -2, and meets the requirement.

The lens element closest to the object side in the lens 10 is the fifth lens element 15, and a curvature radius R2 of an object side surface of the fifth lens element 15 is 199.505 mm, which is greater than -380 mm and less than 380 mm, and meets the requirement. A ratio R2/EFL of the curvature radius R2 of the object side surface of the fifth lens element 15 to the focal length EFL of the lens 10 is -5.688, which is greater than -10 and less than 10, and meets the requirement.

A ratio BFL/EFL of a back focal length BFL of the lens 10 to the focal length EFL of the lens 10 is 0.8502, which is greater than 0.8 and less than 0.9, and meets the requirement.

The focal length EFL of the lens 10 is 35.075 mm, which is greater than 33 mm and less than 38 mm, and meets the requirement.

**Table 5 shows optical parameters of optical elements in the projection apparatus 120 provided in Embodiment 3.**

| Surface number | Surface type | R (mm) | TH (mm) | Nd | Vd |
|---|---|---|---|---|---|
| OBJ | Spherical | Infinity | 10000 | | |
| S1 | Spherical | -132.250 | 9.200 | 1.91 | 35.5 |
| S2 | Spherical | -59.289 | 0.057 | | |
| S3 | Spherical | 54.846 | 4.394 | 2.02 | 29.1 |
| S4 | Spherical | 126.551 | 6.502 | | |
| S5 | Spherical | -33.235 | 10.350 | | |
| S6 | Spherical | 64.097 | 2.639 | 1.81 | 22.7 |
| S7 | Spherical | Infinity | 0.000 | | |
| S8 | Spherical | 158.559 | 21.229 | 1.73 | 54.7 |
| S9 | Spherical | -35.775 | 0.058 | | |
| S10 | Spherical | 40.453 | 6.200 | 1.82 | 46.6 |
| S11 | Spherical | 199.505 | 1.325 | | |
| S12 | Spherical | Infinity | 1.455 | 1.523 | 58.6 |
| S13 | Spherical | Infinity | 27.120 | | |
| ImgH | Spherical | Infinity | 0 | | |

S1 is the image side surface of the first lens element 11. S2 is an object side surface of the first lens element 11. S3 is an image side surface of the second lens element 12. S4 is an object side surface of the second lens element 12. S5 is an image side surface of the third lens element 13. S6 is an object side surface of the third lens element 13. S7 is the stop 16. S8 is an image side surface of the fourth lens element 14. S9 is an object side surface of the fourth lens element 14. S10 is an image side surface of the fifth lens element 15. S11 is the object side surface of the fifth lens element 15. S12 is an image side surface of the cover glass 17. S13 is an object side surface of the cover glass 17. OBJ is a projection plane (an object plane). ImgH is an imaging plane.

R is a curvature radius of an optical element (for example, a lens element or cover glass) at a position corresponding to an optical axis. TH is a surface thickness of the optical element in a direction of the optical axis. Nd is a refractive index of each optical element when a d line is irradiated to the optical element. Vd is an Abbe number of the optical element.

**Table 6 shows optical parameters of the lens 10 provided in Embodiment 3.**

| | | | |
|---|---|---|---|
| f1 (mm) | 110.074 | EFL (mm) | 35.075 |
| f2 (mm) | 90.656 | TTL (mm) | 90.53 |
| f3 (mm) | -78.009 | Fno | 1.0 |
| f4 (mm) | 41.682 | BFL (mm) | 29.83 |
| f5 (mm) | 60.612 | R1 (mm) | -132.25 |
| R2 (mm) | 199.505 | FOV (°) | 22.3 |

EFL is the focal length of the lens 10. FOV is a maximum field of view of the lens 10. Fno is an aperture of the lens 10. BFL is the back focal length of the lens 10. TTL is an optical total length of the lens 10. R1 is the curvature radius of the image side surface of the lens element closest to the image side in the lens 10. R2 is the curvature radius of the object side surface of the lens element closest to the object side in the lens 10. f1 is the focal length of the first lens element 11, f2 is the focal length of the second lens element 12, f3 is the focal length of the third lens element 13, f4 is the focal length of the fourth lens element 14, and f5 is the focal length of the fifth lens element 15.

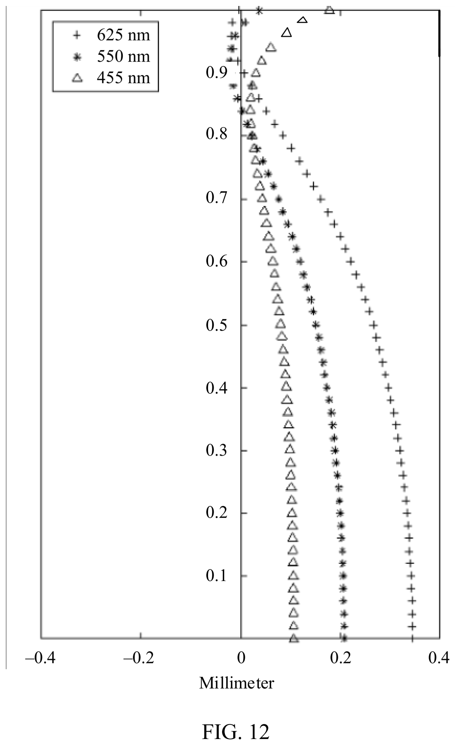

FIG. 12 is a spherical chromatic aberration diagram of the lens in FIG. 11. In FIG. 12, a vertical coordinate represents a normalized pupil coordinate, and a horizontal coordinate represents an axial aberration in a unit of millimeter. In FIG. 12, three curves respectively correspond to axial aberration curves of light with a wavelength of 625 nm, light with a wavelength of 550 nm, and light with a wavelength of 455 nm that pass through the lens 10 in this embodiment. It can be learned from FIG. 12 that, in this embodiment, the axial aberration is controlled within an excessively small range, and is well corrected.

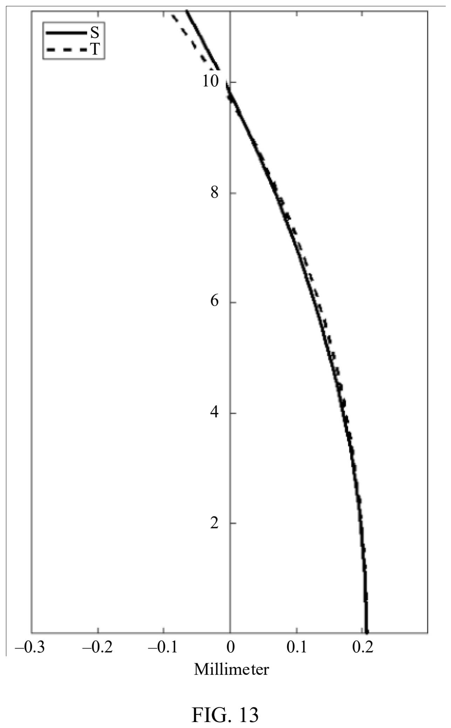

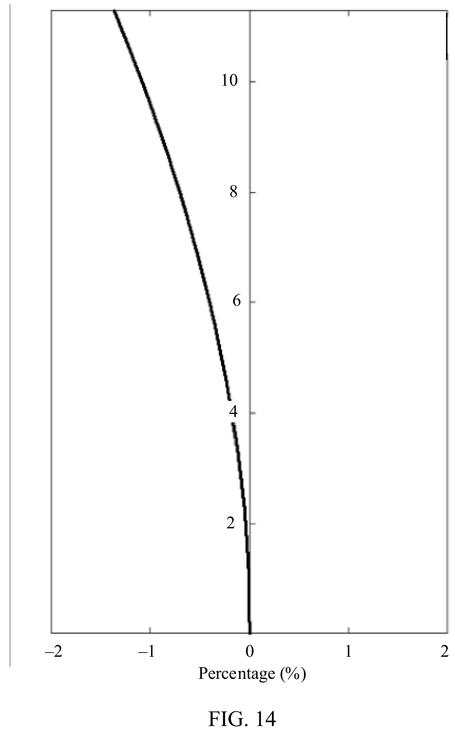

FIG. 13 is an astigmatism and field curvature diagram of the lens in FIG. 11, and FIG. 14 is a distortion diagram of the lens 10 in FIG. 11. In FIG. 13, S represents field curvature values of light with a wavelength of 525 nm on a meridian image surface, and T represents field curvature values of the light with the wavelength of 525 nm on a sagittal image surface. In FIG. 14, a solid line represents distortion values of the light with a central wavelength of 525 nm that passes through the lens 10 in this embodiment. In this embodiment, with reference to FIG. 13 and FIG. 14, it can be learned that the lens 10 provided in this embodiment controls the field curvature and the distortion within corresponding ranges, so that a use requirement can be met.

In descriptions of embodiments of this application, it should be noted that, unless otherwise clearly specified and limited, the term "mounting", "interconnection", or "connection" should be understood in a broad sense, for example, may be fastening, may be an indirect connection through an intermediate medium, or may be an internal connection between two elements or an interaction relationship between two elements. A person of ordinary skill in the art may understand specific meanings of the foregoing terms in embodiments of this application based on specific cases.

In embodiments of this application, it is implied that an apparatus or element in question needs to have a particular orientation, or needs to be constructed and operated in a particular orientation, and therefore cannot be construed as a limitation on embodiments of this application. In the description of embodiments of this application, unless otherwise exactly and specifically ruled, "a plurality of" means two or more than two.

In the specification, claims, and accompanying drawings of embodiments of this application, the terms "first", "second", "third", "fourth", and the like (if any) are intended to distinguish between similar objects, but do not necessarily indicate a specific order or sequence. It may be understood that data used in such a way is interchangeable in proper cases, so that embodiments of this application described herein can be implemented in other sequences than the sequence illustrated or described herein. In addition, terms "include" and "have" and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this application means two or more than two. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A lens, comprising at least five lens elements arranged from an image side to an object side, wherein
an image side surface of a lens element closest to the image side in the lens is a concave surface, there are at least three lens elements having positive focal powers in the lens, and there is at least one lens element having a negative focal power in the lens, wherein
when there is one lens element having a negative focal power, the lens element having the negative focal power is disposed between the lens element closest to the image side in the lens and a lens element closest to the object side in the lens.

2. The lens according to claim 1, wherein the lens satisfies a relational expression: 0.8<BFL/EFL<0.9, wherein BFL is a back focal length of the lens, and EFL is a focal length of the lens.

3. The lens according to claim 1 or 2, wherein the lens satisfies a relational expression 33 mm<EFL<38 mm, wherein EFL is a focal length of the lens.

4. The lens according to any one of claims 1 to 3, wherein the lens satisfies a relational expression: -4<R1/EFL<-2, wherein R1 is a curvature radius of the image side surface of the lens element closest to the image side in the lens, and EFL is a focal length of the lens.

5. The lens according to any one of claims 1 to 4, wherein the lens satisfies a relational expression: -152 mm<R1<-99 mm, wherein R1 is a curvature radius of the image side surface of the lens element closest to the image side in the lens.

6. The lens according to any one of claims 1 to 5, wherein the lens satisfies a relational expression: -10<R2/EFL<10, wherein R2 is a curvature radius of an object side surface of the lens element closest to the object side in the lens, and EFL is a focal length of the lens.

7. The lens according to any one of claims 1 to 6, wherein the lens satisfies a relational expression: -380 mm<R2<380 mm, wherein R2 is a curvature radius of an object side surface of the lens element closest to the object side in the lens.

8. The lens according to any one of claims 1 to 7, wherein the lens element closest to the image side in the lens has a positive focal power.

9. The lens according to any one of claims 1 to 8, wherein the lens element closest to the object side in the lens has a positive focal power.

10. A projection apparatus, comprising a display unit and the lens according to any one of claims 1 to 9, wherein the display unit is configured to emit imaging light to the lens.

11. The projection apparatus according to claim 10, wherein the display unit comprises a light source unit and a modulation unit; and
the modulation unit is configured to: modulate a light beam emitted by the light source unit to generate the imaging light, and emit the imaging light to the lens.

12. The projection apparatus according to claim 11, wherein the display unit further comprises a reflection unit, and the reflection unit is configured to reflect the light beam emitted by the light source unit to the modulation unit.

13. A vehicle lamp apparatus, comprising a housing and the projection apparatus according to any one of claims 10 to 12, wherein at least a part of the projection apparatus is disposed inside the housing.

14. A vehicle, comprising the vehicle lamp apparatus according to claim 13.
